# EUROPEAN PATENT APPLICATION

(11) **EP 4 725 309 A1**
(43) Date of publication of application: **15.04.2026**
(21) Application number: 25194625.7
(22) Date of filing: 07.08.2025
(51) Int. Cl.: A01M 7/00, A01B 79/00

(54) **PLANT EMERGENCE MONITORING SYSTEMS**

(30) Priority: 09.10.2024 US 202418910145
(71) Applicant: Deere & Company, Moline, IL 61265 (US)
(72) Inventor: Ingersoll, Tiffany, Mannheim (DE)
(74) Representative: Holst, Sönke

(57) **Abstract**

An agricultural sprayer includes one or more product tanks. A product application system includes a plurality of applicator mechanisms to spray the products on a field. An imaging system includes an array of cameras mounted on the sprayer to obtain image data indicative of plant matter on the field. A control system is configured to: analyze the image data and selectively spray weeds; during the selectively spraying, gather image data including images of a row crop and correlate the image data to a geographic location of the row crop in the field; perform image processing of the image data to determine emergence data; correlate the emergence data to the geographic location of the row crop in the field; and generate a graphic report illustrating the emergence state of the row crop as a function of the geographic location of the row crop in the field.

## Description

### BACKGROUND

### 1. Field of the Disclosure

The present disclosure relates to systems for monitoring the emergence of plants in a field.

### 2. Background of the Disclosure

There are many different types of agricultural machines. One such machine is an agricultural applicator machine configured to apply an agricultural substance (liquid or dry forms) to a field. One example agricultural applicator machine includes an agricultural spraying machine or sprayer. An agricultural sprayer, for example, often includes a tank or reservoir that holds a substance to be sprayed on an agricultural field. Such systems typically include a supply line or conduit mounted on a foldable, hinged, or retractable and extendible boom. The supply line is coupled to one or more spray nozzles mounted along the boom. Each spray nozzle is configured to receive the substance and direct the substance to a crop or field during application. As the sprayer travels through the field, the boom is moved to a deployed position and the substance is pumped from the tank or reservoir, through the nozzles, so that it is sprayed or applied to the field over which the sprayer is traveling. Such sprayers may include control systems configured to detect and selectively spray one or more types of plant material detected in the path of the sprayer.

One issue faced by the manager of the agricultural operation is the monitoring and management of the quality of the emergence and growth of the crops throughout the growing season. There is a need for improved systems for monitoring the emergence of plants in a field.

### SUMMARY:

In a first embodiment a method of operating an agricultural sprayer to treat weeds interspersed among a row crop in a field includes: selectively spraying the weeds in the field during a spray treatment of the field by automatically detecting the presence of the weeds ahead of the sprayer, and then automatically target spraying the detected weeds with a product carried by the sprayer while avoiding broadcast spraying of the product on the row crop; during the selectively spraying, gathering image data including images of the row crop using an imaging system carried by the sprayer and correlating the image data to a geographic location of the row crop in the field; performing image processing of the image data to determine emergence data corresponding to an emergence state of the row crop from the field; correlating the emergence data to the geographic location of the row crop in the field; and generating a graphic report illustrating the emergence state of the row crop as a function of the geographic location of the row crop in the field.

In another embodiment an agricultural sprayer includes one or more tanks carried by the sprayer for holding one or more products. A product application system includes a plurality of selectively actuatable applicator mechanisms configured to spray the one or more products on a field. An imaging system includes an array of cameras mounted on a boom of the sprayer and configured to obtain image data indicative of plant matter on the field, the plant matter including weeds and a row crop. A control system is configured to: analyze the image data to detect the presence of the weeds ahead of the sprayer and selectively spray the weeds with the one or more products; during the selectively spraying, gather image data including images of the row crop using the imaging system and correlate the image data to a geographic location of the row crop in the field; perform image processing of the image data to determine emergence data corresponding to an emergence state of the row crop in the field; correlate the emergence data to the geographic location of the row crop in the field; and generate a graphic report illustrating the emergence state of the row crop as a function of the geographic location of the row crop in the field.

Numerous objects, features and advantages of the embodiments set forth herein will be readily apparent to those skilled in the art upon reading of the following disclosure when taken in conjunction with the accompanying drawings.

### BRIEF DESCRIPTION OF THE DRAWINGS

Fig. 1 is a schematic perspective view of an agricultural sprayer spraying weeds in a field.
Fig. 2 is a block diagram of one example of an agricultural machine architecture including the control system of the agricultural sprayer.
Fig. 3 is a schematic perspective view of the agricultural sprayer selectively spraying first and second weed types with first and second products from first and second tanks.
Fig. 4 is a block diagram of one example of a plant analysis architecture.
Fig. 5 is one example of a more detailed block diagram of a plant evaluation system.
Fig. 6 is a schematic depiction of a graphic report illustrating the emergence state of the row crop as a function of the geographic location of the row crop in the field.

### DETAILED DESCRIPTION

Targeted application of herbicides and other products applied with agricultural sprayers allows sprayer owners to apply product in areas where it is needed, and more importantly, not apply product in areas where it is not needed. The present disclosure combines the advantages of targeted spraying with the gathering of plant emergence data during the spraying operation and the use of the plant emergence data to provide graphic reports on emergence and otherwise plan future actions.

### Targeted Spraying:

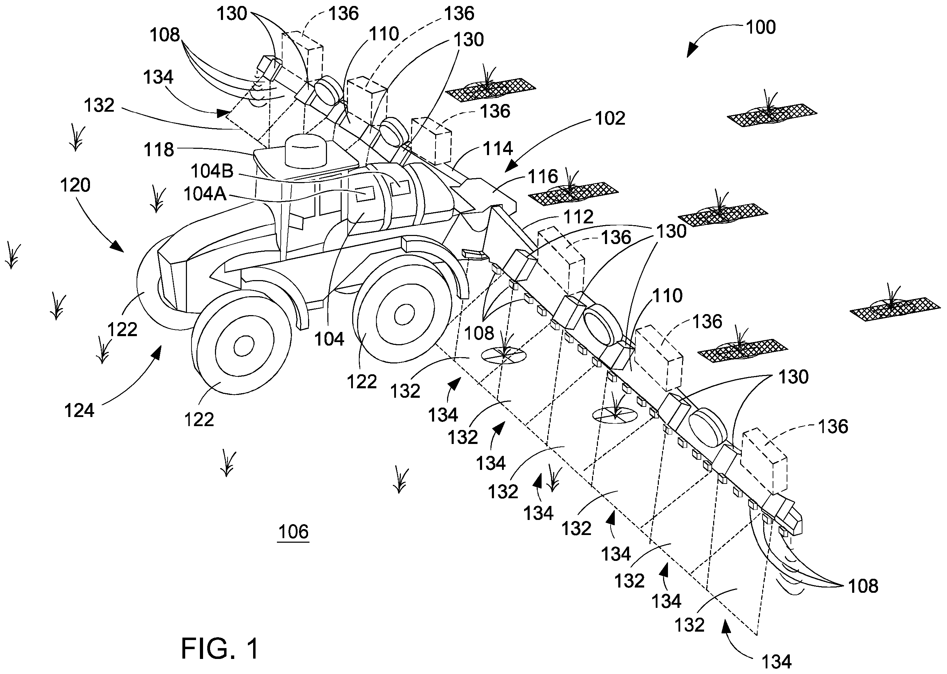

FIG. 1 illustrates one example of an agricultural spraying machine (or agricultural sprayer) 100. Machine 100 may also be more generally referred to as a mobile agricultural material application machine 100. Machine 100 includes a spraying system 102 having at least one tank 104 containing a liquid that is to be applied to a field 106. The at least one tank 104 may include a first tank 104A and a second tank 104B. Tanks 104 are fluidically coupled to spray nozzles 108 by a delivery system comprising a set of conduits. A fluid pump is configured to pump the liquid from tank(s) 104 through the conduits through nozzles 108. Spray nozzles 108 are coupled to, and spaced apart along, boom 110. Boom 110 includes arms 112 and 114 which can articulate or pivot relative to a center frame 116. Thus, arms 112 and 114 are movable between a storage or transport position and an extended or deployed position (shown in FIG. 1). Machine 100 includes an operator compartment 118, a steering system 120 including a set of wheels 122, or other traction elements, and a propulsion system 124 (e.g., internal combustion engine). The spraying system 102 may also be referred to as a product application system 102 and the nozzles 108 may be described as selectively actuatable applicator mechanisms 108 for applying the product from the tanks 104.

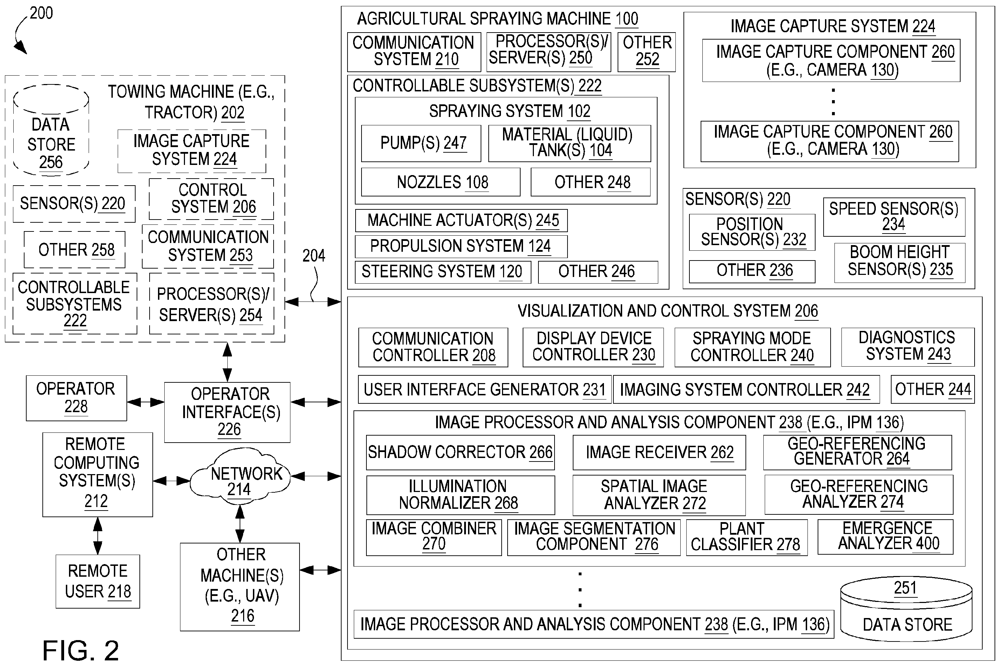

FIG. 2 is a block diagram illustrating one example of an agricultural machine architecture 200 including agricultural spraying machine 100. It is noted that while agricultural spraying machine 100 is illustrated as a self-propelled machine in the present example, in other examples spraying machine 100 can include a towed implement coupled to a towing machine 202. An example of towing machine 202 includes a tractor that is coupled to machine 100 through one or more links 204 (electrical, mechanical, pneumatic, etc.).

Machine 100 includes a visualization and control system 206 (also referred to as control system 206) configured to control other components and systems of machine 100. For instance, control system 206 includes a communication controller 208 configured to control communication system 210 to communicate between components of machine 100 and/or with other machines or systems, such as remote computing system 212 and/or machine(s) 216, either directly or over a network 214. Network 214 can be any of a wide variety of different types of networks such as the Internet, a cellular network, a local area network, a near field communication network, or any of a wide variety of other networks or combinations of networks or communication systems.

A remote user 218 is illustrated interacting with remote computing system 212. Remote computing system 212 can be a wide variety of different types of computing systems. For example, remote computing system 212 can include remote server environment that is used by remote user 218. Further, it can include a mobile device, remote network, or a wide variety of other remote systems. Remote computing system 212 can include one or more processors or servers, a data store, and it can include other items as well.

Communication system 210 can include wired and/or wireless communication logic, which can be substantially any communication system that can be used by the systems and components of machine 100 to communicate information to other items, such as between control system 206, sensors 220, controllable subsystems 222, and an image capture system 224. In one example, communication system 210 communicates over a controller area network (CAN) bus (or another network, such as an Ethernet network, etc.) to communicate information between those items. The information can include the various sensor signals and output signals generated by the sensor variables and/or sensed variables.

Control system 206 is configured to control interfaces, such as operator interface(s) 226 that include input mechanisms configured to receive input from an operator 228 and output mechanisms that render outputs to operator 228. The input mechanisms can include mechanisms such as hardware buttons, switches, joysticks, keyboards, etc., as well as virtual mechanisms or actuators such as a virtual keyboard or actuators displayed on a touch sensitive screen. The output mechanisms can include display screens, speakers, etc. Accordingly, control system 206 includes a display device controller 230 configured to control one or more display devices on, or associated with, machines 100 or 202 and a user interface generator 231 configured to generate user interface displays that are rendered on the display devices.

Sensor(s) 220 can include any of a wide variety of different types of sensors. In the illustrated example, sensors 220 include position sensor(s) 232, speed sensor(s) 234, boom height sensor(s) 235, and can include other types of sensors 236 as well. Position sensor(s) 232 are configured to determine a geographic position of machine 100 on the field, and can include, but are not limited to, a Global Navigation Satellite System (GNSS) receiver that receives signals from a GNSS satellite transmitter. It can also include a Real-Time Kinematic (RTK) component that is configured to enhance the precision of position data derived from the GNSS signal. Speed sensor(s) 234 are configured to determine a speed at which machine 100 is traveling the field during the spraying operation. Speed detection can utilize sensors that sense the movement of ground-engaging elements (e.g., wheels or tracks) and/or can utilize signals received from other sources, such as position sensor(s) 232. Boom height sensor(s) 235 are configured to detect a height of a portion of the boom from the ground surface. Examples of height sensors include optical sensors, ultrasonic sensors, etc. Alternatively, or in addition, the sensors can include accelerometers, gyroscopes, inertial measurement units (IMUs), to name a few.

Control system 206 includes image processor and analysis components 238 (also referred to as image processing components 238), a spraying mode controller 240, an imaging system controller 242, a diagnostics system 243, and can include other items 244 as well. Control system 206 is configured to generate control signals to control communication system 210, sensors 220, controllable subsystems 222, or any other items in architecture 200. Controllable subsystems 222 include spraying system 102, steering system 120, propulsion system 124, machine actuators 245, and can include other items 246 as well. Spraying system 102 includes one or more pumps 247, configured to pump the agricultural substance (e.g., a liquid chemical) from tank 104 through conduits to nozzles 108 mounted on boom 110. Spraying system 102 can include other items 248 as well.

Control system 206 is configured to generate control signals to control spraying system 102 to apply the substance to identified field areas. For example, depending on where a target field area is located within an image, component 238 communicates a "spray" command to the appropriate nozzle(s) via a controller area network (CAN) bus. In one example, upon the nozzles receiving the spray command, the nozzle executes the spray command based on when it receives the command, a travel velocity of the nozzle, and other attributes that impact the spray reaching the target area. Examples include, but are not limited to, environmental conditions, plant height, etc. The nozzles are controlled to remain open for a period of time that is sufficient to cover the target area.

Machine 100 includes one or more processors or servers 250, a data store 251, and can include other items 252 as well. Data store 251 is configured to store data for use by machine 100. For example, data store 251 can store field location data that identifies a location of the field, field shape and topography data that defines a shape and topography of the field, crop location data that is indicative of a location of crops in the field (e.g., the location of crop rows), or any other data.

As also illustrated in FIG. 2, where towing machine 202 tows agricultural spraying machine 100, towing machine 202 can include some of the components discussed herein with respect to machine 100. For instance, towing machine 202 can include some or all of sensors 220, component(s) of control system 206, some or all of controllable subsystems 222 and/or some or all components of system 224. Also, towing machine 202 can include a communication system 253 configured to communicate with communication system 210, one or more processors or servers 254, a data store 256, and it can include other items 258 as well.

Image capture system 224 includes one or more image capture components 260 configured to capture images of the field, and image processing components 238 are configured to process those images. Examples of an image processing component 238 include an image signal processor or image processing module (IPM).

With reference to the example shown in FIG. 1, image capture components 260 include a plurality of cameras 130 spaced along boom 110. Each camera 130 corresponds to one or more of nozzles 108 and includes a field of view (FOV) 132 configured to image a portion 134 of the field that is to be sprayed by the corresponding nozzle(s) 108. Further, as generally represented in FIG. 1 at reference numerals 136, machine 100 includes a plurality of image processing components 136 (such as IPMs). Each image processing component 136 is configured to receive and process images from one or more of cameras 130. The following discussion will also refer to image capture components 260 as cameras 260, but it is understood that other image capture components can be utilized as well. The cameras 130, 260 may capture images in the visible light spectrum as well as imagery outside of the visible light spectrum. For example, images in the near infrared (NIR) or radar information (Synthetic Aperture Radar) may be captured by the cameras 130. The cameras 130 may also include multispectral or hyperspectral cameras.

Referring again to FIG. 2, the captured images represent a spectral response captured by image capture system 224 that are provided to image processing components 238 and/or stored in data store 251. A spectral imaging system obtains spectral images of the field under analysis. For instance, a camera can be a multispectral camera or a hyperspectral camera, or a wide variety of other devices for capturing spectral images. The camera can detect visible light, infrared radiation, or otherwise. In one example, a vision system includes red green blue (RGB) cameras, near infra-red red green (NRG), or near infra-red (NIR) cameras.

In one example, cameras 260 include stereo cameras configured to capture still images, a time series of images, and/or a video of the field. An example stereo camera captures high definition video at thirty frames per second (FPS) with one hundred and ten degree wide-angle FOV. Of course, this is for sake of example only.

Illustratively, a stereo camera includes two or more lenses with a separate image sensor for each lens. Stereo images (e.g., stereoscopic photos) captured by a stereo camera allow for computer stereo vision that extracts three-dimensional information from the digital images. In another example, a single lens camera can be utilized to acquire images (referred to as a "mono" image).

Image processing component 238 includes an image receiver 262 configured to receive the images from image capture system 224, a geo-referencing generator 264 configured to geo-reference the images to locations in the field, a shadow corrector 266 is configured to perform shadow correction on the images, and an illumination normalizer 268 configured to normalize illumination in the image. Also, ambient lighting conditions can be acquired utilizing a white balance camera or an incident light sensor, for example. Ambient lighting conditions can be used to correct for daylight color, light direction/position, and/or lighting intensity. Further, acquired images of the targeted application/spray area can be corrected for lens distortion, tones/color correction, etc. Acquired images can be remapped or resized according to camera height and adjusted for ambient lighting conditions.

An image combiner 270 is configured to combine a number of images into a larger image of the field under analysis. For instance, image combiner 270 can stitch or mosaic the images. In order to mosaic the images, geographic location information corresponding to each of the images can be used to stitch the images together into a larger image of the field under analysis, which is then analyzed by image processing component 238. Further, the geo-referencing of images can be done automatically against the ground control points, or it can be done manually as well.

Image processing component 238 is configured to process the image data of the field acquired from the corresponding camera(s) 260 to identify plant matter in those images, and characteristics (i.e., type, health, maturity, etc.) of the plants. For example, image processing component 238 is configured to identify areas of the field that include crop plants and/or areas that include weed plants. For sake of the present discussion, a "weed" or "weed plant" refers to a non-crop plant identified in the field. That is, weeds include plant types other than crop plants (e.g., corn plants in a corn field) expected to be present in the field under consideration. In the corn field example, weeds or weed plants include plants other than corn plants.

Spatial image analyzer 272 is configured to perform spatial analysis on the images, and spectral image analyzer 274 is configured to perform spectral analysis on the images. Spatial image analyzer 272, in one example, obtains previously generated crop location data which provides a geographic location of the rows of crop plants (or the plants themselves). Spectral image analyzer 274 performs spectral analysis to evaluate the plants in the images. In one example, spectral analysis includes identifying areas in the image that have a spectral signature that corresponds to ground versus plants. For instance, spectral analysis can include a green/brown comparison.

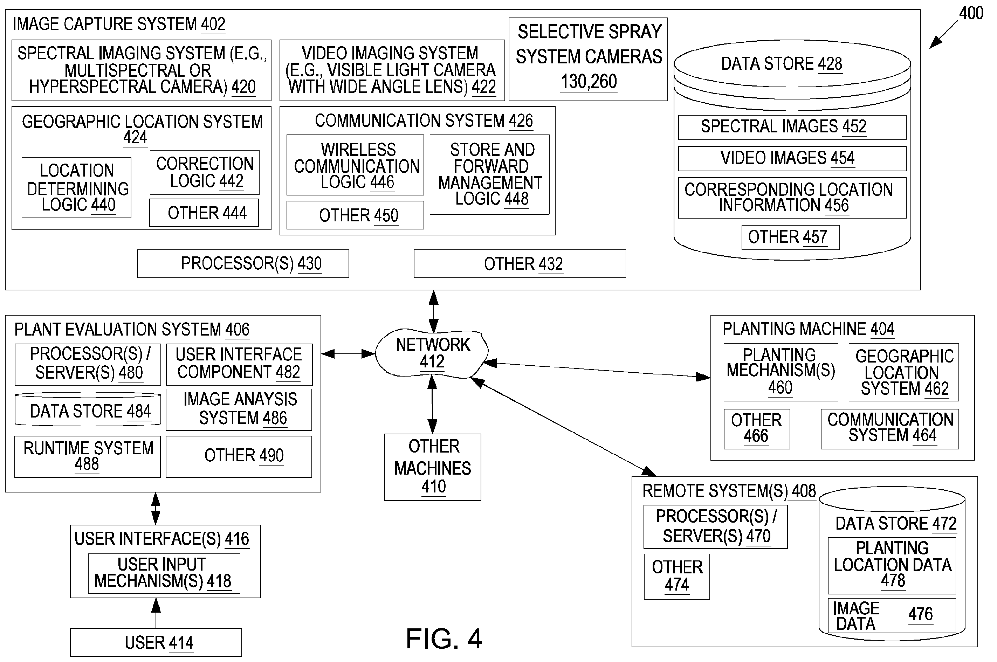

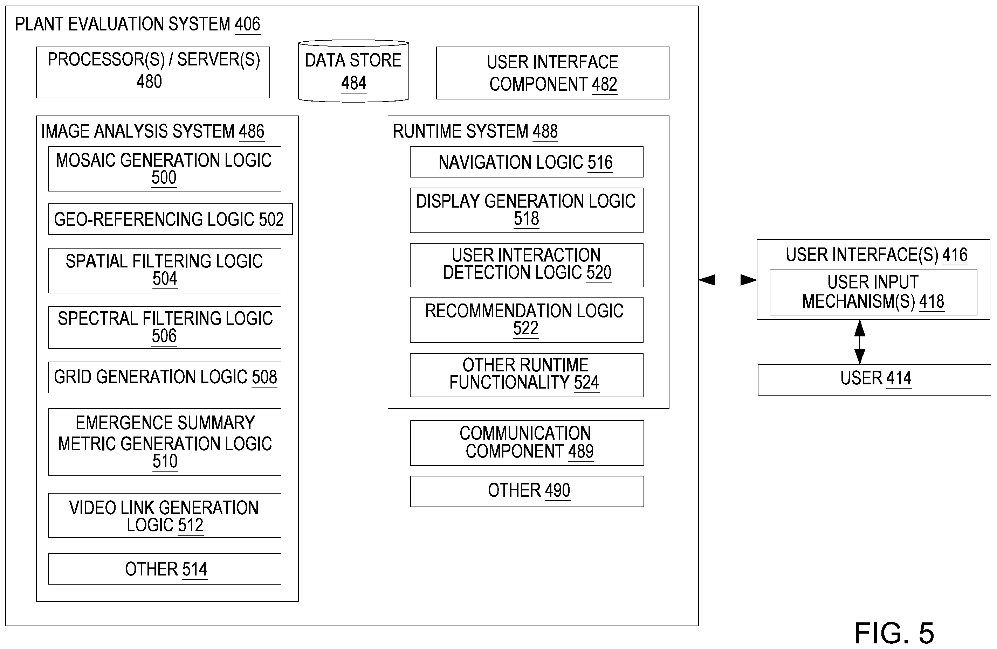

An image segmentation component 276 is configured to perform image segmentation on a received image, to segment or divide the image into different portions for processing. A plant classifier 278, which can be trained using plant training data stored in data store 251, or obtained otherwise, is configured to identify areas in the image that represent a target plant type (e.g., crop plants, weed plants), depending on the spraying application being performed. For example, weed identification logic can identify weeds in the image, based on the image segmentation performed by image segmentation component 276. The weed identification may for example identify weeds of a first weed type and weeds of a second weed type. The first and second weed types may, for example, be grass and broad leaf weeds respectively, which are known to respond to different types of herbicides for control. Other weed types may also be targeted. The location of plants can be stored as plant location data in data store 251. Image processing component 238 can include other items as well, including the emergence analyzer architecture 400 further described below with regard to Figs. 4 and 5.

Spraying mode controller 240 is configured to selectively operate spraying system 102 to apply a substance (i.e., chemicals or nutrients) to the field using a plurality of different spraying modes. Examples of the substance include, but are not limited to, herbicides, fertilizers, fungicides, or other chemicals, for pest control, weed control, growth regulation, fungus control, crop nutrient support, etc. The substance may include the first product as stored in the first tank 104A for treatment of weeds of the first weed type, and the second product as stored in second tank 104B for treatment of weeds of the second weed type.

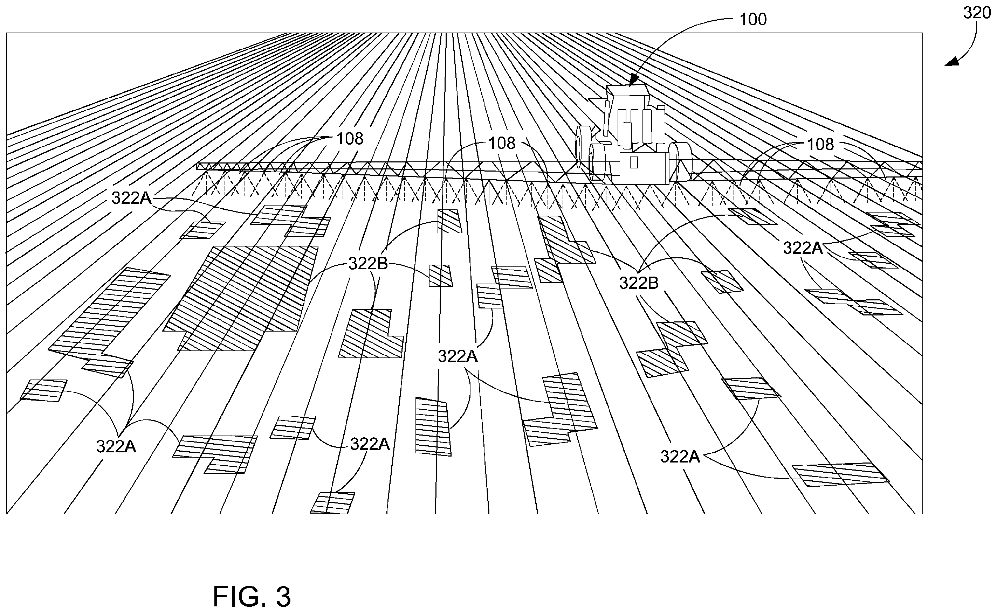

Spraying system 102 is controlled by controller 240 in a spraying mode that applies the substance to targeted areas. The targeted areas are identified using images acquired by image capture system 224 and processed by image processing components 238 to identify locations of crop plants and/or weed plants, to be sprayed, within those images. An example of the second spraying mode is illustrated in FIG. 3 and includes an automated spraying control or precision spraying operation that controls a subset of the nozzles 108 to spray precise dispersal areas 322, such as directly on a plant (crop or weed), in between plants, or otherwise, at a particular rate so that a target quantity of the substance is applied to the dispersal area. Precision spraying applications in precision farming and application techniques can reduce the use of substances, such as pesticides resulting in reduced grower costs and a reduction in environmental stress.

For example, a first product suitable for treatment of a first weed type may be loaded in the first tank 104A and a second product suitable for treatment of a second weed type may be loaded in the second tank 104B. Then as the sprayer 100 moves through the field the processor and sensors of the spraying system may detect weeds of the first weed type and selectively spray weeds of the first weed type with the first product. And the processor and sensors of the spraying system may detect weeds of the second weed type and selectively spray weeds of the second weed type with the second product. As shown in Fig. 3, areas 322A detected as containing weeds of the first weed type may be sprayed with the first product from first tank 104A, and areas 322B detected as containing weeds of the second weed type may be sprayed with the second product from the second tank 104B. The first and second weed types may, for example, be grass and broad leaf weeds, respectively. The spraying system may avoid spraying locations in the field not including weeds of either the first weed type or the second weed type.

The system may of course selectively spray plants of more than two types. The system could carry a third tank filled with a third product, and then detect and selectively spray a third plant type. The system may also include a broadcast spray mode in which a give product is broadcast over the entire field.

### Gathering Emergence Data:

One problem addressed by the present disclosure is the efficient gathering of image data which can be processed to determine emergence data corresponding to an emergence state of the row crops being grown in the field. The present disclosure provides a system which uses, at least in part, the imaging system 130, 260 of the selective spraying machine 100 to gather the image data as the selective spraying machine 100 is traversing the field. It will be appreciated that a typical field will be traversed many times during a growing season for the purpose of spraying the field. The system of the present invention captures image data suitable for processing to determine the emergence data, simultaneously with the spraying operation and using at least in part the same imaging system used for the selective spraying operation.

Figs. 4 and 5 schematically illustrate one embodiment of a plant analysis architecture 400 that may be used to perform image processing of the image data and determine emergence data corresponding to the emergence state of the row crop. The architecture of Figs. 4 and 5 relies at least in part on the image data periodically gathered by the imaging system 130, 260 of the selective spraying machine. It may also utilize other available image data, including data previously gathered by an unmanned aerial vehicle.

It will be appreciated that the various processors and processing system components such as data stores, etc. shown and described in Figs. 4 and 5 regarding the machine system architecture 400 of Figs. 4 and 5 may be in addition to or may be shared with the analogous components of the machine architecture 200 shown in Fig. 2. A single machine 100 may include architecture 200 alone, architecture 400 alone, a combination of both architectures 200 and 400, or either of the architectures 200 or 400 combined with selected aspects of the other.

### Emergence Analyzer Architecture of Figs. 4 and 5:

FIG. 4 is a block diagram of one example of a plant analysis architecture 400, more specifically an emergence analyzer architecture 400. In the example shown in FIG. 4, architecture 400 illustratively includes image capture system 402, planting machine 404, plant evaluation system 406, and it can include remote systems 408 and other machines 410. Plant evaluation system 406 is shown generating user interfaces 416 with user input mechanisms 418, for access by user 414. User 414 can illustratively interact with user input mechanisms 416 in order to control and manipulate plant evaluation system 406.

Also, in the example shown in FIG. 4, the items are illustratively connected to one another over a network 412. Network 412 can be any of a wide variety of different types of networks, such as the Internet or another wide area network, a variety of other wireless or wired networks, etc.

Before describing the items in architecture 400 in more detail, a brief overview of the operation of architecture 400 will first be provided. In one example, image capture system 402 includes an unmanned aerial vehicle, although other unmanned systems could be used as well. Image capture system 402 also includes the cameras 130, 260 of the selective sprayer 100, and its plant evaluation system 406 performs analysis based at least in part on the image data gathered by cameras 130, 260 as the selective sprayer machine 100 passes through the field 106.

System 402 may capture spectral images of a field under analysis, as well as video images. Geographic location information is associated with those images, and they are provided to plant evaluation system 406. Planting machine 404, when it planted the crops in the field under analysis, illustratively generated geographic location information that identifies the location of the plants in the field, or the rows of crops in the field using, for instance, RTK GPS system. This information is also provided to plant evaluation system 406. Plant evaluation system 406, itself, illustratively identifies evaluation zones in the field under analysis based on the location of the crops in that field. It then analyzes the images received from image capture system 402 to identify crop plants in the evaluation zones. It evaluates the images of those crop plants to determine an emergence characteristic corresponding to those plants. For instance, it may determine whether the plants are emerging uniformly, ahead of schedule, behind schedule, or not emerging, among other things. It divides the images of the field into grid sections and assigns an emergence summary metric, which is indicative of the emergence characteristics of plants in that grid, to each grid section. It then links the video images of each grid section, also received from image capture system 402, to the grid sections. Then, when a user 414 accesses plant evaluation system 406, the user can illustratively view an image of the grid sections that shows the various emergence summary metrics. Also, the user can easily navigate to the video image so the user can also see a video image of any particular grid section.

A more detailed description of each of the items in architecture 400 will now be provided. System 402 illustratively includes spectral imaging system 420, video imaging system 422, geographic location system 424, communication system 426, data store 428, processor 430, and it can include a wide variety of other items 432, as well. Spectral imaging system 420 illustratively includes a camera that takes spectral images of the field under analysis. For instance, the camera can be a multispectral camera or a hyperspectral camera, or a wide variety of other devices for capturing spectral images. Video imaging system 422 illustratively includes a camera that captures images in the visible or thermal infrared range. For example, it can be a visible light video camera with a wide angle lens, or a wide variety of other video imaging systems. The cameras of spectral imaging system 420 and video imaging system 422 may include the cameras 130, 260 of the selective sprayer machine 100, as well as other cameras such as those of an unmanned aerial vehicle.

Geographic location system 424 can include location determining logic 440, correction logic 442, and it can include other items 444. The location determining logic 440 can, for instance, be a satellite navigation receiver that receives satellite information from a positioning satellite. Correction logic 442 can include a correction receiver or transceiver which can, for example, receive correction information from a differential correction base station, or from a satellite, or a real time kinematic information that is used to correct or enhance the precision of, position data received from a global navigation satellite system. In one example, the geographic location information generated by system 424 can have a spatial resolution on the order of several centimeters, once corrected, although less precise systems can just as easily be used. These are examples only, and some other examples of geographic location systems are discussed below.

Communication system 426 illustratively includes wireless communication logic 446, store and forward management logic 448, and it can include other items 450. Wireless communication logic 446 can be substantially any wireless communication system that can be used by image capture system 402 to communicate information to the other items in architecture 400. Store and forward management logic 448 illustratively stores information, when transmission is not possible for whatever reason, and then forwards it once transmission becomes possible again. Some examples of store and forward scenarios are described in further detail below.

Data store 428 illustratively stores the spectral images 452 generated by spectral imaging system 420. It also illustratively stores the video images 454 generated by video imaging system 422. As briefly mentioned above, when the images are taken by imaging systems 420 and 422, geographic location system 424 illustratively generates geographic location information corresponding to a geographic location reflected in those images. Thus, data store 428 illustratively stores the corresponding geographic location information 456 for the spectral images 452 and video images 454 and it can store other items 457 as well.

Planting machine 404 illustratively includes a set of planting mechanisms 460, a geographic location system 462, a communication system 464, and it can include a wide variety of other planting machine functionality 466. As planting machine 404 travels over the field, it plants crop, illustratively in rows, using planting mechanisms 460. Geographic location system 462 can be the same type as geographic location system 424 described above with respect to image capture system 402, or a different type of system. It illustratively generates geographic location information that identifies the geographic location of the crop plants (or at least the rows of crop plants) when they are planted in the field. Communication system 464 can be the same type of system as system 426, or a different type of system. It illustratively communicates the geographic location information identifying the location of the crop plants, or rows, over network 412.

Other machines 410 can include a wide variety of different machines. For example, they can include other planting machines or even other machines that travel over the field to apply pesticides, herbicides, fertilizer, etc.

Remote systems 408 can also be a wide variety of different systems. They can be remote server environments, remote computer systems that may be used, for instance, by a farmer, a farm manager, etc. They can also be remote computing systems, such as mobile devices, remote networks, or a wide variety of other remote systems. In one example, the remote systems 408 include one or more processors or servers 470, data store 472, and they can include other items 474. The remote systems 408 can be configured as a remote server environment that stores the image data 476 generated by image capture system 402 (which can include the spectral images 452, video images 454, and corresponding location information 456) as well as planting location data 478, that is generated by planting machine 404, which indicates the location of crop plants or plant rows in the field. This is just one example of a remote system 408, and a wide variety of others can be used as well.

Plant evaluation system 406 illustratively includes one or more processors or servers 480, a user interface component 482, data store 484, image analysis system 486, runtime system 488, communication component 489, and it can include a wide variety of other items 490. In one example, plant evaluation system 406 can run one or more applications that comprise image analysis system 486 and runtime system 488. Systems 486 and 488 can be embodied as other items as well. Image analysis system 486 illustratively receives the image data (either directly from image capture system 402, or from remote system 408, or from another location), along with the plant location data 478 (either from planting machine 404, remote system 408, or another system). It then evaluates the image data to determine any of a number of different crop characteristics. For instance, it can determine whether the crop is emerging uniformly, at a rate that is ahead of schedule, behind schedule, or that it is not emerging, etc. This analysis is performed by first identifying evaluation zones based upon the location of the crop plants (or rows) in the field, and then performing spectral analysis within those evaluation zones to identify the crops, and various characteristics of those crops.

Runtime system 488 can be used by user 414 to access that information. For instance, the user can control runtime system 488 to display the various images, emergence summary metrics, or other analysis results generated by image analysis system 486. In addition, the user can view video images taken by video imaging system 422 to visually verify, or otherwise evaluate, the veracity of the analysis results. In addition, user 414 can evaluate how to treat the field (or various sites within the field) based upon the analysis results. In one example, image analysis system 486 also generates recommendations for treating various spots within the field, based upon the analysis data. This can vary widely from things such as applying more fertilizer, applying no fertilizer, replanting, etc. Communication component 489 can be used to communicate the analysis results, or other information generated by plant evaluation system 406, to other items in architecture 400 as well.

FIG. 5 shows one example of a more detailed block diagram of plant evaluation system 406. FIG. 5 shows that, in one example, image analysis system 486 illustratively includes mosaic generation logic 500, geo-referencing logic 502, spatial filtering logic 504, and spectral filtering logic 506. It can also include grid generation logic 508, emergence summary metric generation logic 510, video link generation logic 512, and it can include other items 514. Also, in the example shown in FIG. 5, runtime system 488 illustratively includes navigation logic 516, display generation logic 518, user interaction detection logic 520, recommendation logic 522, and it can include a wide variety of other runtime functionality 524.

### Combined Selective Spraying and Emergence Analysis:

The present disclosure provides a system which uses the imaging system 130, 260 of the selective spraying machine 100 to gather image data as the selective spraying machine 100 is traversing the field, and then analyzes that data to periodically evaluate plant emergence using the architecture 400 during the growing season.

The operators of agricultural businesses have multiple concerns throughout the growing season that could significantly impact their crop yields. Those concerns include:
1. Did they achieve the overall plant population they expected?
2. Did the planter correctly space the plants?
3. Were there other factors impacting the emergence of the plants, such as weather, soil conditions, insects, disease, etc?
4. Did they get the best possible hybrid performance?
5. Could anything have been done to rescue areas of poor emergence?
6. Where are the areas of predicted high yield vs. low yield, so that the operator can make adjustments?
7. What is the predictive yield to use for input purchasing and for marketing and storage plans?

These concerns can be monitored and addressed on a continuing basis during the ground season by periodically making a stand count of emerged plants and by observing the growth of the plants after emergence. The stand count can be the observed space between each row of the crop and the number of plants per unit area. Obtaining such a stand count during the application passes made by the selective sprayer 100 is a particularly efficient way to collect the needed stand count data at very low cost. This gives the operator of the agricultural business the opportunity to analyze their crop status throughout the season, plan future operations, be proactive in replanting and maintenance efforts, and make better agronomic and business decisions. Emergence can be evaluated to maximize yield and minimize the chance of a major crop loss.

The most fundamental item of emergence data to be determined is whether the seeds that were planted emerged from the ground as crop plants. Various factors may be measured to evaluate the quality of this state of emergence. The spacing between emerged plants may be compared to the spacing between planted seeds. The population of emerged plants may be compared to the number of seeds planted or to a targeted population. By monitoring conditions during the previous planting operation, any subsequent gaps in the emerged plant population may be correlated to various parameters of the planter including seed spacing, ride quality, applied downforce, gauge wheel margin, singulation, skips, multiples (of seeds), ground contact, etc.

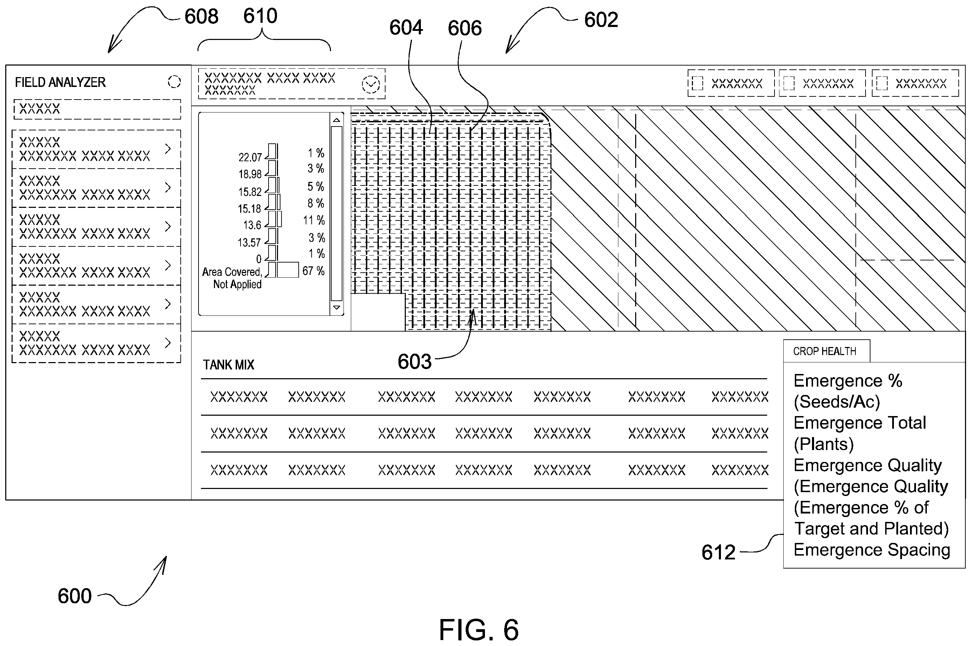

For example, the success of a planting in the context of emerged plants may be expressed as an emergence percentage of the seed population that was planted. Such emergence data may be displayed as part of a graphic report 600 illustrating the emergence state of the row crop as a function of the geographic location of the row crop in the field. An example of such a graphic report 600 is schematically shown in Fig. 6. The report 600 may be in the form of a display on a screen. The report 600 may also be in printed form. The report 600 may be stored as digital data.

An upper portion 602 of the report 600 may include a visual depiction 603 of the agricultural field 106 in which rows of emerged plant crops are indicated by the lighter areas 604 and unplanted spacing between the rows is indicated by the darker areas 606. A block of identifying information 608 may identify the location and size of the field along with owner identification and other information. A block 610 shown to the left of the field 603 may include quantitative analysis of a selected item of emergence data. For example, the data in block 610 may show color coded correspondence of data such as emergence % to various colored areas of the field depiction 603.

Block 612 may list selectable emergence parameters that the operator can choose for analysis in the quantitative analysis block 610. For example, block 612 is shown as allowing selection between:
1. Emergence % (Seeds/Acre);
2. Emergence Total (Plants);
3. Emergence Quality (Emergence % of Target and Planted); and
4. Emergence Spacing.

The gathering of such emergence data over the growing season for multiple agricultural fields allows the operator to compare emergence quality by field and by variety of crop planted. This can highlight various factors affecting the emergence quality, such as for example the application of the selective spraying technology of Figs. 1-3.

Such analysis also provides opportunities for the automation of agricultural equipment such as the selective sprayer 100. For example, the emergence state of a particular field may be compared to a threshold emergence setting. The selective sprayer 100 may analyze the emergence state of the field being sprayed in real time during the spraying operation. If an emergence state is detected below the threshold emergence setting, i.e. an area of crop failure is detected, the selective sprayer 100 may automatically stop the selective spraying operation in the area of crop failure.

One example of a method of operating an agricultural sprayer 100 to treat weeds interspersed among a row crop in a field 106, includes:
selectively spraying the weeds in the field during a spray treatment of the field by automatically detecting the presence of the weeds ahead of the sprayer 100, and then automatically target spraying the detected weeds with a product carried by the sprayer while avoiding broadcast spraying of the product on the row crop;
during the selectively spraying, gathering image data including images of the row crop using an imaging system 130, 260 carried by the sprayer 100 and correlating the image data to a geographic location of the row crop in the field;
performing image processing of the image data to determine emergence data corresponding to an emergence state of the row crop from the field;
correlating the emergence data to the geographic location of the row crop in the field; and
generating a graphic report 600 illustrating the emergence state of the row crop as a function of the geographic location of the row crop in the field.

The steps of performing, correlating and generating may be performed on the controller carried by the selective sprayer 100 or they may be performed remotely from the agricultural sprayer 100. The steps of performing, correlating and generating may be performed during the selective spraying operation or they may be performed subsequent to the selective spraying.

The gathering of image data during the selective spraying of the field 106 may occur on multiple occasions during periodic passages of the selective sprayer 100 through the field 106 throughout the growing season. During each pass of the selective sprayer 100 further image data may be gathered and further image processing may be performed on that further image data to determine further emergence data corresponding to a further emergence state of the row crop. That further emergence data may be correlated to the geographic location of the row crop in the field and the graphic report 600 may be periodically updated.

For example, during a first pass of the selective sprayer 100, at an appropriate time after the initial planting of seeds, the graphic report 600 may be focused on simply identifying where row crops have emerged and where they have not. The graphic report 600 at this stage may include data representative of a percentage of planted seeds resulting in emerged row crop plants as a function of the geographic location of the row crop in the field.

In another aspect, the graphic report may include data representative of a total number of emerged row crop plants as a function of the geographic location of the row crop in the field.

In a further aspect, the graphic report may include data representative of emergence quality as a percentage of targeted plant emergence achieved by emerged row crop plants as a function of the geographic location of the row crop in the field.

Subsequent passes of the selective sprayer 100 may gather additional data from which further emergence of row crop may be identified. Additionally, the image data may be analyzed to detect the height of the emerged crop, and thus the successful growth of the crop over time may be monitored. Such subsequent emergence data may be representative of both an emergence and a magnitude of growth of the row crop.

Analysis of the emergence data may determine an emergence date of the row crop as a function of geographic location within the field.

The operator of the agricultural business may generate a planting prescription for future planting operations based on analysis of the image data and/or the emergence data. The planting prescription may be generated automatically by the controller.

Thus, it is seen that the apparatus and methods of the present disclosure readily achieve the ends and advantages mentioned as well as those inherent therein. While certain preferred embodiments of the disclosure have been illustrated and described for present purposes, numerous changes in the arrangement and construction of parts and steps may be made by those skilled in the art, which changes are encompassed within the scope and spirit of the present disclosure as defined by the appended claims. Each disclosed feature or embodiment may be combined with any of the other disclosed features or embodiments.

## Claims

1. A method of operating an agricultural sprayer to treat weeds interspersed among a row crop in a field, comprising:
selectively spraying the weeds in the field during a spray treatment of the field by automatically detecting the presence of the weeds ahead of the sprayer, and then automatically target spraying the detected weeds with a product carried by the sprayer while avoiding broadcast spraying of the product on the row crop;
during the selectively spraying, gathering image data including images of the row crop using an imaging system carried by the sprayer and correlating the image data to a geographic location of the row crop in the field;
performing image processing of the image data to determine emergence data corresponding to an emergence state of the row crop from the field;
correlating the emergence data to the geographic location of the row crop in the field; and
generating a graphic report illustrating the emergence state of the row crop as a function of the geographic location of the row crop in the field.

2. The method of claim 1, further comprising:
selectively spraying the weeds in the field during one or more further spray treatments of the field;
during the selectively spraying of the weeds in the field during the one or more further spray treatments of the field, gathering further image data including images of the row crop using the imaging system carried by the sprayer and correlating the further image data to the geographic location of the row crop in the field;
performing image processing of the further image data to determine further emergence data corresponding to a further emergence state of the row crop in the field;
correlating the further emergence data to the geographic location of the row crop in the field; and
updating the graphic report illustrating the further emergence state of the row crop as a function of the geographic location of the row crop in the field.

3. The method of any of the above claims, wherein the emergence data is representative of both an emergence and a magnitude of growth of the row crop.

4. The method of any of the above claims, wherein:
the detecting of the presence of the weeds ahead of the sprayer is performed at least in part using the same imaging system used to gather images of the row crop.

5. The method of any of the above claims, wherein:
the graphic report includes data representative of a percentage of planted seeds resulting in emerged row crop plants as a function of the geographic location of the row crop in the field.

6. The method of any of the above claims, wherein:
the graphic report includes data representative of a total number of emerged row crop plants as a function of the geographic location of the row crop in the field.

7. The method of any of the above claims, wherein:
the graphic report includes data representative of emergence quality as a percentage of targeted plant emergence achieved by emerged row crop plants as a function of the geographic location of the row crop in the field.

8. The method of any of the above claims, wherein:
the performing, the correlating and the generating are performed on the agricultural sprayer.

9. The method of any of claims 1-7, wherein:
the performing, the correlating and the generating are performed remotely from the agricultural sprayer.

10. The method of any of the above claims, wherein:
the performing, the correlating and the generating are performed during the selectively spraying.

11. The method of any of claims 1-9, wherein:
the performing, the correlating and the generating are performed subsequent to the selectively spraying.

12. The method of any of the above claims, further comprising:
automatically comparing the emergence state to a threshold emergence setting; and
if the emergence state is below the threshold emergence setting, automatically stopping the selectively spraying.

13. The method of any of the above claims, further comprising:
generating a planting prescription for future planting operations using the image data and/or the emergence data.

14. The method of any of the above claims, further comprising:
determining an emergence date as part of the emergence data.

15. An agricultural sprayer, comprising:
one or more tanks carried by the sprayer for holding one or more products;
a product application system including a plurality of selectively actuatable applicator mechanisms configured to spray the one or more products on a field;
an imaging system including an array of cameras mounted on a boom of the sprayer and configured to obtain image data indicative of plant matter on the field, the plant matter including weeds and a row crop; and
a control system configured to:
analyze the image data to detect the presence of the weeds ahead of the sprayer and selectively spray the weeds with the one or more products;
during the selectively spraying, gather image data including images of the row crop using the imaging system and correlate the image data to a geographic location of the row crop in the field;
perform image processing of the image data to determine emergence data corresponding to an emergence state of the row crop in the field;
correlate the emergence data to the geographic location of the row crop in the field; and
generate a graphic report illustrating the emergence state of the row crop as a function of the geographic location of the row crop in the field.

## Amended claims

### Amended claims in accordance with Rule 137(2) EPC.

1. A method of operating an agricultural sprayer (100) to treat weeds interspersed among a row crop in a field, comprising:
selectively spraying the weeds in the field during a spray treatment of the field by automatically detecting the presence of the weeds ahead of the sprayer (100), and then automatically target spraying the detected weeds with a product carried by the sprayer (100) while avoiding broadcast spraying of the product on the row crop;
during the selectively spraying, gathering image data including images of the row crop using an imaging system (130, 260) carried by the sprayer (100) and correlating the image data to a geographic location of the row crop in the field;
performing image processing of the image data to determine emergence data corresponding to an emergence state of the row crop from the field;
correlating the emergence data to the geographic location of the row crop in the field; and
generating a graphic report (600) illustrating the emergence state of the row crop as a function of the geographic location of the row crop in the field;
**characterized in that** the graphic report (600) includes data representative of a percentage of planted seeds resulting in emerged row crop plants as a function of the geographic location of the row crop in the field.

2. The method of claim 1, further comprising:
selectively spraying the weeds in the field during one or more further spray treatments of the field;
during the selectively spraying of the weeds in the field during the one or more further spray treatments of the field, gathering further image data including images of the row crop using the imaging system (130, 260) carried by the sprayer (100) and correlating the further image data to the geographic location of the row crop in the field;
performing image processing of the further image data to determine further emergence data corresponding to a further emergence state of the row crop in the field;
correlating the further emergence data to the geographic location of the row crop in the field; and
updating the graphic report (600) illustrating the further emergence state of the row crop as a function of the geographic location of the row crop in the field.

3. The method of any of the above claims, wherein the emergence data is representative of both an emergence and a magnitude of growth of the row crop.

4. The method of any of the above claims, wherein:
the detecting of the presence of the weeds ahead of the sprayer (100) is performed at least in part using the same imaging system (130, 260) used to gather images of the row crop.

5. The method of any of the above claims, wherein:
the graphic report (600) includes data representative of a total number of emerged row crop plants as a function of the geographic location of the row crop in the field.

6. The method of any of the above claims, wherein:
the graphic report (600) includes data representative of emergence quality as a percentage of targeted plant emergence achieved by emerged row crop plants as a function of the geographic location of the row crop in the field.

7. The method of any of the above claims, wherein:
the performing, the correlating and the generating are performed on the agricultural sprayer (100).

8. The method of any of claims 1-7, wherein:
the performing, the correlating and the generating are performed remotely from the agricultural sprayer (100).

9. The method of any of the above claims, wherein:
the performing, the correlating and the generating are performed during the selectively spraying.

10. The method of any of claims 1-8, wherein:
the performing, the correlating and the generating are performed subsequent to the selectively spraying.

11. The method of any of the above claims, further comprising:
automatically comparing the emergence state to a threshold emergence setting; and
if the emergence state is below the threshold emergence setting, automatically stopping the selectively spraying.

12. The method of any of the above claims, further comprising:
generating a planting prescription for future planting operations using the image data and/or the emergence data.

13. The method of any of the above claims, further comprising:
determining an emergence date as part of the emergence data.

14. An agricultural sprayer (100), comprising:
one or more tanks (104) carried by the sprayer (100) for holding one or more products;
a product application system (102) including a plurality of selectively actuatable applicator mechanisms (108) configured to spray the one or more products on a field;
an imaging system (130, 260) including an array of cameras (130) mounted on a boom (110) of the sprayer (100) and configured to obtain image data indicative of plant matter on the field, the plant matter including weeds and a row crop; and
a control system (206) configured to:
analyze the image data to detect the presence of the weeds ahead of the sprayer (100) and selectively spray the weeds with the one or more products;
during the selectively spraying, gather image data including images of the row crop using the imaging system (130, 260) and correlate the image data to a geographic location of the row crop in the field;
perform image processing of the image data to determine emergence data corresponding to an emergence state of the row crop in the field;
correlate the emergence data to the geographic location of the row crop in the field; and
generate a graphic report (600) illustrating the emergence state of the row crop as a function of the geographic location of the row crop in the field;
**characterized in that** the control system (206) is configured to generate the graphic report (600) to include data representative of a percentage of planted seeds resulting in emerged row crop plants as a function of the geographic location of the row crop in the field.
